# EUROPEAN PATENT APPLICATION

(11) **EP 2 320 076 A2**
(43) Date of publication of application: **11.05.2011**
(21) Application number: 10189247.9
(22) Date of filing: 28.10.2010
(51) Int. Cl.: F03D 1/06, F03D 7/02

(54) **Wind turbine blade system for providing a controlled flow of fluid to or from a blade surface**

(30) Priority: 04.11.2009 US 612501
(71) Applicant: General Electric Company, Schenectady, NY 12345 (US)
(72) Inventor: Pesetsky, David S., Greenville, SC 29615 (US); Wang, Jing, Greenville, SC 29615 (US); Haans, Wouter, 48499, Salzbergen (Niedersachsen) (DE); KIirtley, Kevin R., Greenville, SC 29615 (US)
(74) Representative: Bedford, Grant Richard

(57) **Abstract**

A wind turbine blade system (200) having a blade (108) rotatably attached to a rotor (106) of a wind turbine (100). The system further includes a controller (605) and one or more openings (203) disposed along at least one surface of the blade (108) and a fluid moving device (207) arranged and disposed to provide a fluid to or from the one or more openings (203). A controlled amount of the fluid is provided to the one or more opening (203). The amount of fluid is determined by the controller (605).

## Description

The present disclosure is generally directed to wind turbines and, in particular, systems and methods for altering the aerodynamics of wind turbine blades.

Wind power and the use of wind turbines have gained increased attention as the quest for alternative energy sources continues. Wind power may be considered one of the cleanest, most environmentally friendly energy sources presently available. Different from traditional fossil fuel sources, wind power is completely renewable and does not produce noxious or environmentally harmful by-products. With an increasing attention towards generating more energy from wind power, technological advances in the art have allowed for increased sizes of wind turbines and new designs of wind turbine components. As the physical sizes and availability of wind turbines increase, so does the need to balance the cost of manufacturing and operating wind turbines to further allow wind power to be cost-competitive with other energy sources.

A modem wind turbine typically includes a tower, a generator, a gearbox, a nacelle, and one or more blades. The blades capture the kinetic energy of wind using aerodynamic principles known in the art. The blades transmit the kinetic energy in the form of rotational energy so as to turn a shaft coupling the blades to a gearbox, or if a gearbox is not used, directly to the generator. The generator then converts the mechanical energy to electrical energy that may be deployed to a utility grid.

The size, shape, and weight of the blades are factors that contribute to energy efficiencies of wind turbines. For example, an increase in blade size increases the energy production of a wind turbine, while a decrease in weight also furthers the value of a wind turbine. Presently, large commercial wind turbines are capable of generating between one and one-half megawatts to five megawatts of power. Efforts to increase blade size and improve blade aerodynamics assist in the continued growth of wind turbine technology and the adoption of wind energy as an alternative energy source. Current wind turbine blades have limited ability to alter their aerodynamics.

It would, therefore, be beneficial to provide a method and system to alter and thus improve the aerodynamics and wind turbine operation by providing fluid, such as air, to surfaces of the blades. In particular, it would be beneficial to provide a controlled amount of fluid to a surface of the blade in a manner that affects the aerodynamic properties of the blade, such as lift.

One aspect of the present disclosure includes a wind turbine blade system having a controller and a blade rotatably attached to a rotor of a wind turbine. The system further includes one or more openings disposed along at least one surface of the blade and a fluid moving device arranged and disposed to provide a fluid to or from the one or more openings. A controlled amount of fluid is provided to the one or more openings, and the controlled amount is determined by the controller.

Another aspect of the present disclosure includes a controller and a plurality of blades rotatably attached to a rotor of the wind turbine. At least one of the plurality of blades includes one or more openings. A fluid moving device is arranged and disposed to provide a fluid to or from the one or more openings. A controlled amount of fluid is provided to the one or more openings, and the controlled amount is determined by the controller.

Still another aspect of the present disclosure includes a method for operating a wind turbine. The method includes providing a blade having one or more openings. The method further includes sensing an operating condition. An amount of fluid flow desired is determined in response to the operating condition sensed. The amount of fluid is provided to or from the openings.

An advantage of the present disclosure includes the ability to controllably alter the aerodynamics of wind turbine blades.

Another advantage of the present disclosure includes the ability to flow fluid, such as air, over components of the wind turbine for cooling, such as within the nacelle.

Still another advantage of the present disclosure is the ability to control fluid flow over individual blades in a controlled fashion to balance or otherwise control the aerodynamics or loads of individual blades.

Still another advantage of the present disclosure is the ability to couple metering methods with a control system that includes feedback to better control the aerodynamics of the blade.

Various features and advantages of the present invention will be apparent from the following more detailed description of the preferred embodiment, taken in conjunction with the accompanying drawings which illustrate, by way of example, the principles of the disclosure, in which:
FIG. 1 is an illustration of an exemplary configuration of a wind turbine.
FIG. 2 includes a partial cutaway view of an exemplary wind turbine blade system.
FIG. 3 includes an enlarged view of an opening module according to an embodiment.
FIG. 4 includes a partial cutaway view of another exemplary wind turbine blade system.
FIG. 5 includes a partial cutaway view of still another exemplary wind turbine blade system.
FIG. 6 includes a partial cutaway view of still another exemplary wind turbine blade system.
FIG. 7 includes a partial cutaway view of still another exemplary wind turbine blade system.
FIG. 8 includes a partial cutaway view of still another exemplary wind turbine blade system.
FIG. 9 includes a partial cutaway view of still another exemplary wind turbine blade system.
FIG. 10 includes a partial cutaway view of still another exemplary wind turbine blade system.
FIG. 11 includes a perspective view of a blade according to an embodiment.
FIG. 12 includes a perspective view of an exemplary variable blockage device.
FIG. 13 includes a block diagram of an exemplary method.

Wherever possible, the same reference numbers will be used throughout the drawings to refer to the same or like parts.

The following detailed description includes references to the accompanying drawings, which form a part of the detailed description. The drawings show, by way of illustration, specific embodiments in which the disclosure may be practiced. These embodiments, which are also referred to herein as "examples," are described in enough detail to enable those skilled in the art to practice the disclosure. The embodiments may be combined, other embodiments may be utilized, or structural, logical and electrical changes may be made without departing from the scope of the present disclosure. The following detailed description is, therefore, not to be taken in a limiting sense, and the scope of the present disclosure is defined by the appended claims and their equivalents.

In this document, the terms "a" or "an" are used, as is common in patent documents, to include one or more than one. In this document, the term "or" is used to refer to a nonexclusive or, unless otherwise indicated.

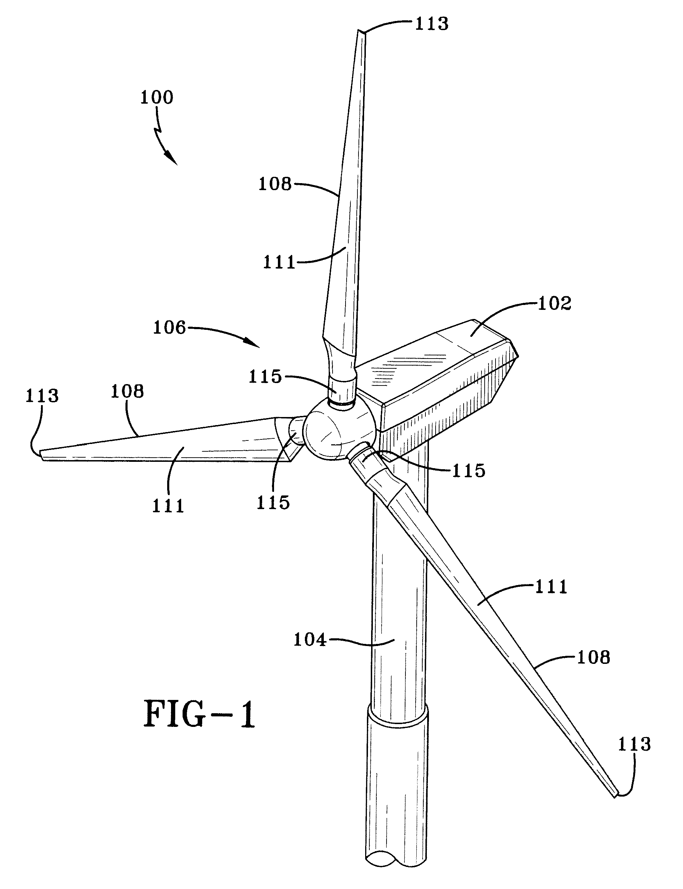

Referring to FIG. 1, an exemplary wind turbine 100 is disclosed. The wind turbine 100 includes a nacelle 102 mounted atop a tall tower 104, only a portion of which is shown in FIG. 1. The nacelle 102 houses turbine components, such as a generator (not shown), gearbox (not shown), control equipment (not shown) and other turbine components. Wind turbine 100 also comprises a wind turbine rotor 106 that includes one or more blades 108 attached to a rotating hub 110. Although wind turbine 100 illustrated in FIG. 1 includes three blades 108, there are no specific limits on the number of blades 108 that can be used. Blades 108 may include hollow reinforced composite structures fabricated from any suitable material known for forming blades 108. As shown in FIG. 1, each blade 108 has an airfoil portion 111 extending from the tip 113 (FIG. 1) to the root 115 or root portion, which is connectable to the hub 110 of the wind turbine. The height of tower 104 is selected based upon factors and conditions known in the art.

Despite how blades 108 are illustrated in FIG. 1, rotor 106 may have blades 108 of any shape, and may have blades 108 of any type and/or any configuration, whether or not such shape, type, and/or configuration is described and/or illustrated herein. One example of another type, shape, and/or configuration of blades 108 is a ducted rotor (not shown) having a turbine (not shown) contained within a duct (not shown). Another example of another type, shape, and/or configuration of blades 108 is a darrieus wind turbine, sometimes referred to as an "eggbeater" turbine. Yet another example of another type, shape, and/or configuration of blades 108 is a savonious wind turbine. Even another example of another type, shape, and/or configuration of blades 108 is a traditional windmill for pumping water, such as, but not limited to, four-bladed rotors having wooden shutters and/or fabric sails. Moreover, wind turbine 100 may, in some embodiments, be a wind turbine wherein rotor 106 generally faces upwind to harness wind energy, and/or may be a wind turbine wherein rotor 106 generally faces downwind to harness energy. Of course, in any embodiment, rotor 106 may not face exactly upwind and/or downwind, but may face generally at any angle (which may be variable) with respect to a direction of the wind to harness energy therefrom.

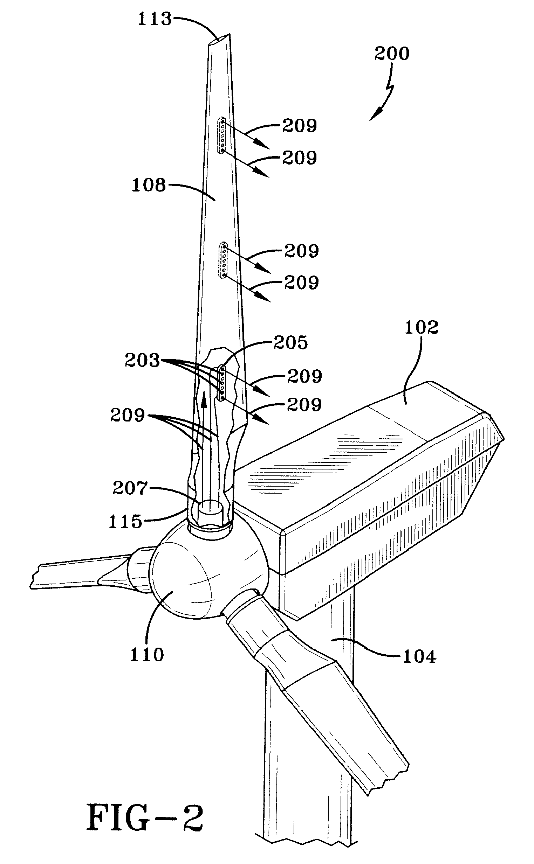

Referring to FIG. 2, the present disclosure includes a wind turbine blade system 200 having a plurality of openings 203 disposed within an opening module 205 on a blade 108. The openings 203 are configured to permit fluid passage from the interior of blade 108 to the exterior of blade 108. Openings 203 may also be configured to ingest external flow and pass it into the interior of blade 108. While the openings 203 are shown as being present as portions of opening modules 205, the disclosure is not so limited. In other embodiments, the openings 203 may be formed directly into blade 108 or may be individually or grouped together. The opening module 205 provides controllable flow of fluid from the interior of blade 108 to the exterior of blade 108. In another embodiment, the opening 203 provides controllable flow from the exterior of blade 108 to the interior of blade 108. The openings 203 and opening module 205 may include any suitable geometry or structure that permits the controlled flow of fluid. In one embodiment, the modules 205 include openings 203 having geometry providing orientation or direction such that the fluid flowing through openings 203 are directed in a predetermined direction. Suitable structures for directing the flow may include ducts, nozzles, variable blockage devices, guiding valves, louvers or other fluid directing structures that may be fixed or adjustable to provide fluid flow in a predetermined direction. In other embodiments, the openings 203 may permit unregulated or unrestricted flow of fluid. The blade system 200 of the present disclosure further includes a fluid moving device 207, such as, but not limited to a blower, fan, compressor, pump or other device capable of moving or accelerating fluid. As shown, the fluid moving device 207 directs a fluid flow 209 into the interior portion of blade 108. In one embodiment, the fluid provided to openings 203 is air. Air may be drawn into the turbine at any suitable location. For example, vents may be provided in the nacelle 102 to permit the drawing in of air into the system 200. In other embodiments, vents in the blade 108 or the hub 110 may be utilized to draw in air. Another embodiment may include drawing air into the system 200 via one set of openings 203 and providing the air to a second set of openings 203. While air is being described as a suitable fluid, other fluids, such as gasses, including compressed or heated gasses, or fluids, such as water or other liquids may be provided to openings 203.

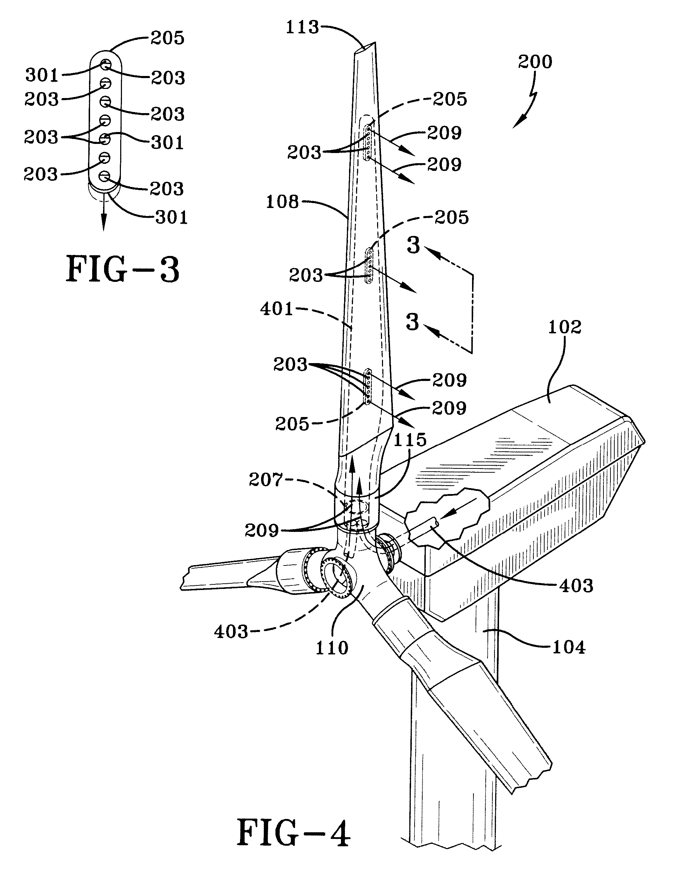

In one embodiment, the opening module 205 includes a fluid restricting device 301 (see FIG. 3). The fluid restricting device 301 may include a plate or solid component that selectively blocks one or more openings 203 of opening module 205 to restrict flow of fluid.

Referring to FIG. 4, the present disclosure includes another embodiment of a wind turbine blade system 200 having a plurality of openings 203 disposed on an opening module 205. The system 200 includes the arrangement of blade 108, opening module 205 with openings 203 and hub 110 shown and disclosed in FIG. 1 above. In addition, the system 200 includes an exhaust duct 401 and a suction duct 403. The exhaust duct 401 includes a conduit or other fluid conveying space extending from the fluid moving device 207 to the openings 203 and receives a fluid flow 209 from the fluid moving device. The suction duct 403 includes a conduit or other fluid conveying space extending from an inlet area (not shown) to the fluid moving device 207. The inlet area may be an interior or exterior vent, a location within the nacelle 102, a location within the tower 104 or fluid source, such as a fluid containing vessel. The arrangement of the exhaust duct 401 and suction duct 403 is not limited to the arrangement shown. In addition, the number of exhaust ducts 401 and suction ducts 403 is not limited. In other embodiments individual exhaust ducts 401 may be utilized for each opening 203. In other embodiments, dampers, manifolds or other devices may be used to controllably deliver and/or draw fluids from openings 203. For example, in one embodiment, openings 203 or groups of openings 203 may be used to draw air into the fluid moving device 207, while the fluid moving device 207 delivers air to other openings 203 or groups of openings or otherwise exhausts the air from the system 200. In the embodiment wherein the drawing of fluid is utilized, it is desirable to draw sufficient fluid from the opening to reduce or eliminate the aerodynamic boundary layer. One embodiment includes at least one module 205 with openings 203 in series connection with fluid moving device 207 and at least one additional module 205 with openings 203 such that the modules 205 upstream of fluid moving device 207 operate in a boundary layer suction mode. This provides a local aerodynamic benefit and the modules 205 downstream of the fluid moving device 207 operate in a boundary layer blowing mode for a local aerodynamic benefit. When disposed along the span of the blade 108 with the modules 205 in suction mode positioned near the blade root and the modules 205 in blowing mode positioned near the blade tip, the power requirements of the fluid moving device 207 are reduced due to a centrifugal pumping effect of the suction/blowing flow stream for a system-level power performance benefit.

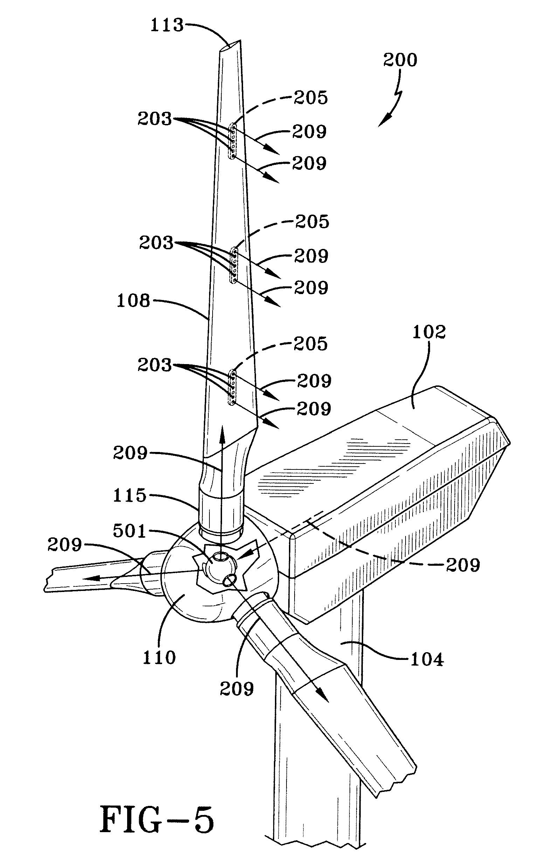

Referring to FIG. 5, the present disclosure includes another embodiment of a wind turbine blade system 200 having a plurality of openings 203 disposed on an opening module 205. The system 200 includes the arrangement of blade 108, opening module 205 with openings 203 and hub 110 shown and disclosed in FIG. 1 above. In addition, in this embodiment, a fluid distribution device 501 is provided in hub 110. The fluid distribution device 501 receives a fluid flow 209 from one or more fluid moving devices

(not shown) or from the interior space of the nacelle 102 and distributes the fluid flow 209 to the interior spaces of the blades 108. The fluid distribution device 501 may be a series of vessels or ducts that only direct fluid or may include fluid moving or accelerating features. The fluid distribution device 501 may also selectively and controllably provide fluid to the blades 108, as needed by the individual blades. For example, larger fluid flow 209 may be provided to blades requiring additional aerodynamic lift, while other blades 108 may receive less or no flow of fluid. The selective distribution of fluid can also be integrated into the operational control in order to increase the efficiency or reduce the loading of the wind turbine by dynamically providing desired aerodynamic effects to the blades on-line, during operation.

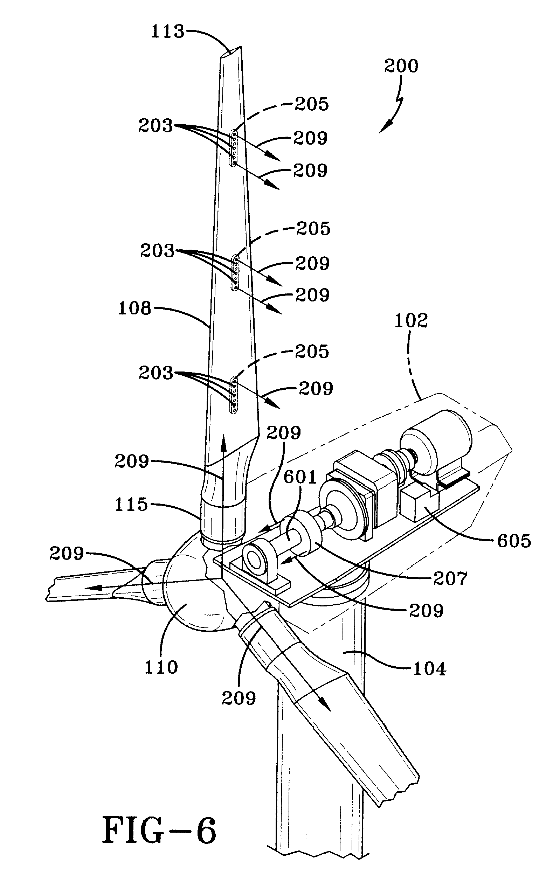

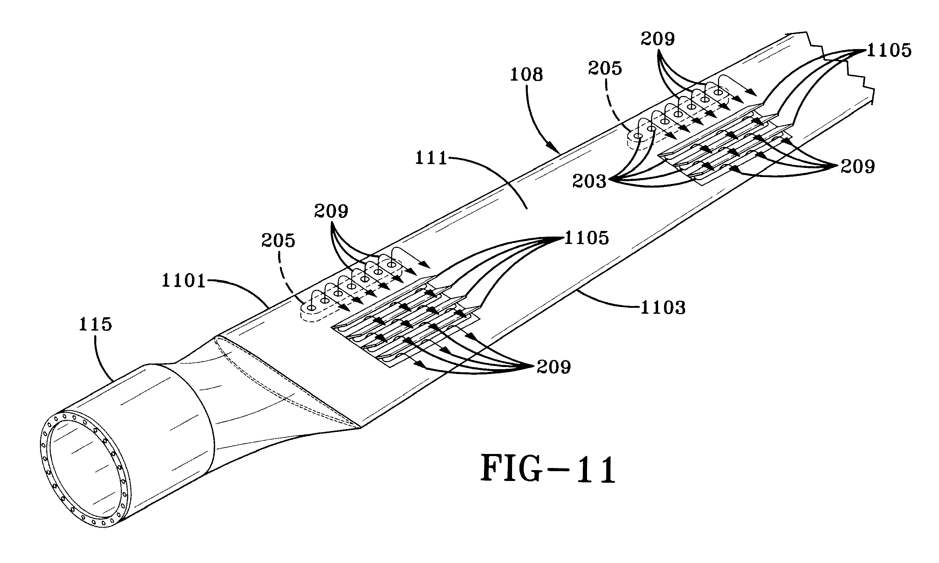

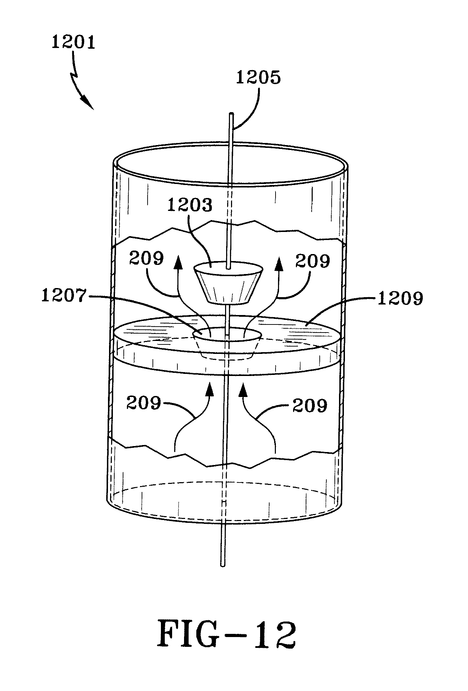

Referring to FIG. 6, the present disclosure includes another embodiment of a wind turbine blade system 200 having a plurality of openings 203 disposed on an opening module 205. The system 200 includes the arrangement of blade 108, opening module 205 with openings 203 and hub 110 shown and disclosed in FIG. 1 above. Also shown in FIG. 6 is controller 605. The controller 605 provides control to the flow controlling devices, such as the fluid moving device 207 and/or the opening module 205. The controller 605 may also provide control to louvers 1105 (see FIG. 11), variable blockage devices 1201 (see FIG. 12), or other flow control devices 207 to deliver a controlled amount of fluid to the blade 108. In this embodiment, the fluid moving device is mounted on a shaft 601. As shown, the shaft 601 is a low speed shaft, but fluid moving devices 207 according to this embodiment may be mounted on any shaft, including, but not limited to, the low or high speed shafts operably coupled to a generator (not shown). The fluid moving device 207 according to this embodiment may be electrically, hydraulically, or mechanically driven. For example, the fluid moving device 207 may be driven by gearing or other attachment directly or indirectly attached to the rotating shaft 601. The fluid moving device 207 provides a fluid flow 209 to the hub 110, which permits flow of fluid into the blades 108. In another embodiment, the fluid moving device may be mounted on or around the shaft 601 and driven by electrical or hydraulic power. An advantage of the arrangement shown in FIG. 6 includes the utilization of fluid already present in the rotating frame, thus reducing or eliminating the need for a fixed-to-rotating frame coupling which is susceptible to leakage.

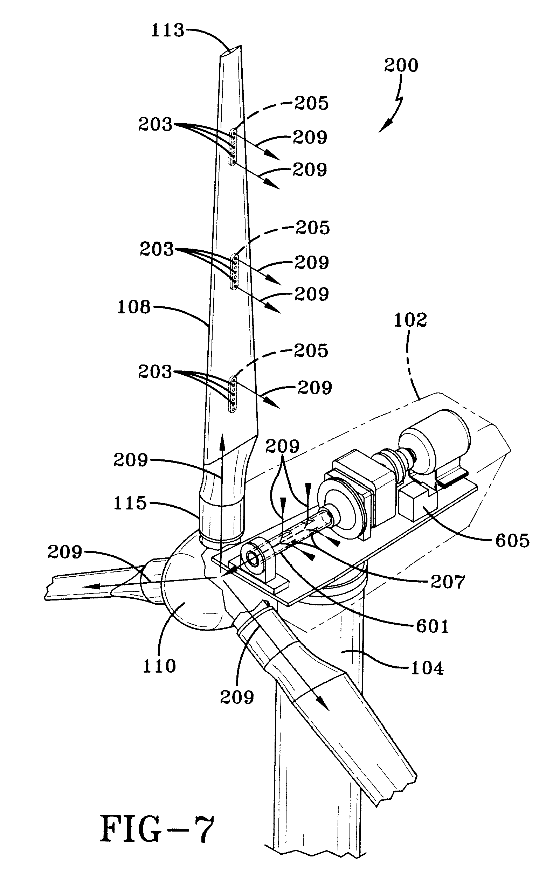

Referring to FIG. 7, the present disclosure includes another embodiment of a wind turbine blade system 200 having a plurality of openings 203 disposed on an opening module 205. The system 200 includes the arrangement of blade 108, opening module 205 with openings 203 and hub 110 shown and disclosed in FIG. 1 above. In addition, as shown in FIG. 6, a controller 605 is present. In this embodiment, the fluid moving device is mounted within a shaft 601. The fluid moving device 207 according to this embodiment may be electrically, hydraulically, or mechanically driven. For example, the fluid moving device 207 may be driven by gearing or other direct or indirect attachment to the rotating shaft 601. The fluid moving device 207 provides a fluid flow 209 to the hub 110, which permits flow of fluid into the blades 108. In another embodiment, the fluid moving device may be mounted on or around the shaft 601 and driven by electrical or hydraulic power. An advantage of the arrangement shown in FIG. 7 includes the utilization of fluid already present in the rotating frame, thus reducing or eliminating the need for a fixed-to-rotating frame coupling which is susceptible to leakage. In addition, the arrangement of this embodiment may also utilize the shaft as the rotating ductwork, reducing the amount of additional equipment required for moving fluid.

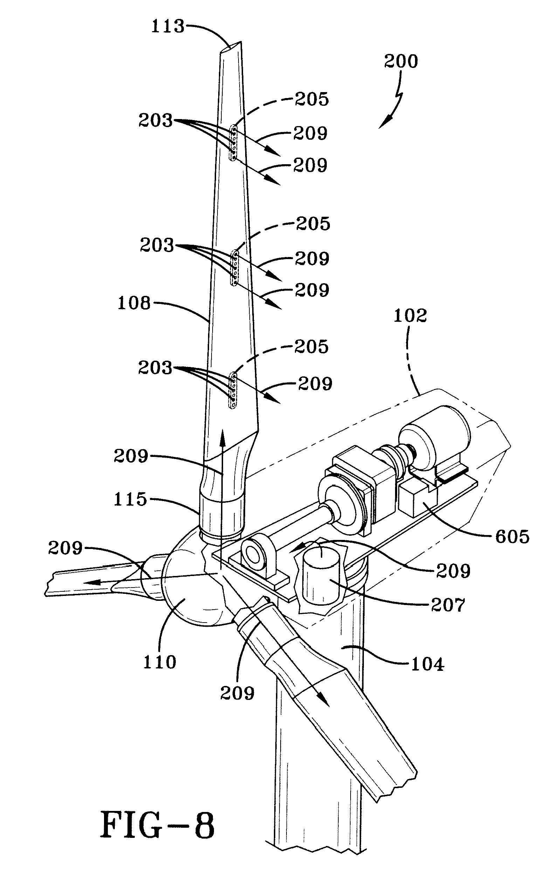

Referring to FIG. 8, the present disclosure includes another embodiment of a wind turbine blade system 200 having a plurality of openings 203 disposed on an opening module 205. The system 200 includes the arrangement of blade 108, opening module 205 with openings 203 and hub 110 shown and disclosed in FIG. 1 above. In this embodiment, the fluid moving device 207 is mounted within the tower 104 near the nacelle 102. The fluid moving device 207 provides a fluid flow 209 through the nacelle 102 to the hub 110, which permits flow of fluid into the blades 108. An advantage of the arrangement shown in FIG. 8 includes the ability to utilize larger equipment as fluid moving device 207.

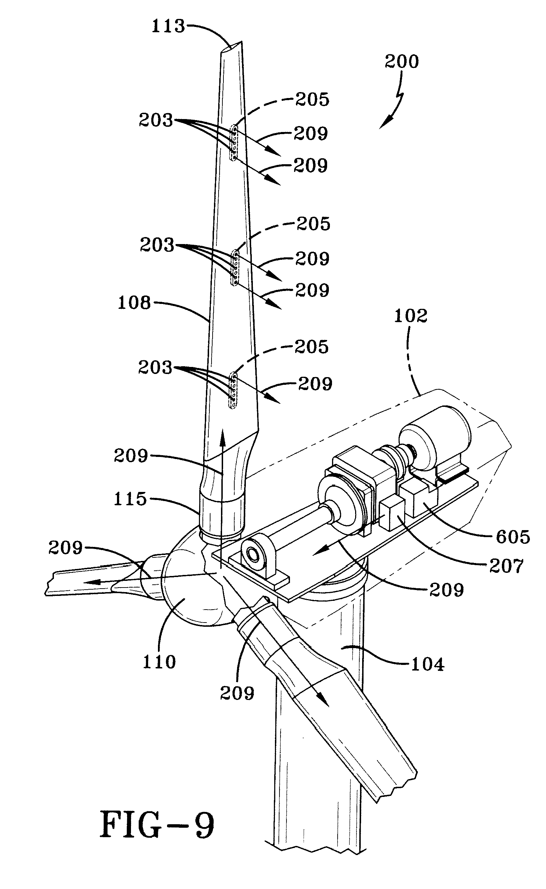

Referring to FIG. 9, the present disclosure includes another embodiment of a wind turbine blade system 200 having a plurality of openings 203 disposed on an opening module 205. The system 200 includes the arrangement of blade 108, opening module 205 with openings 203 and hub 110 shown and disclosed in FIG. 1 above. In addition, as shown in FIG. 6, a controller 605 is present. In this embodiment, the fluid moving device 207 is mounted within nacelle 102. The fluid moving device 207 provides a fluid flow 209 through the nacelle 102 to the hub 110, which permits flow of fluid into the blades 108. The positioning of the fluid moving device 207 permits the flow of fluid, such as air, around components within the nacelle 102. The fluid flow 209 may provide cooling for components, such as the generator, allowing the components to maintain operational temperatures and extend the lifetime of the components. An advantage of the arrangement shown in FIG. 9 includes the ability to utilize larger equipment as fluid moving device 207.

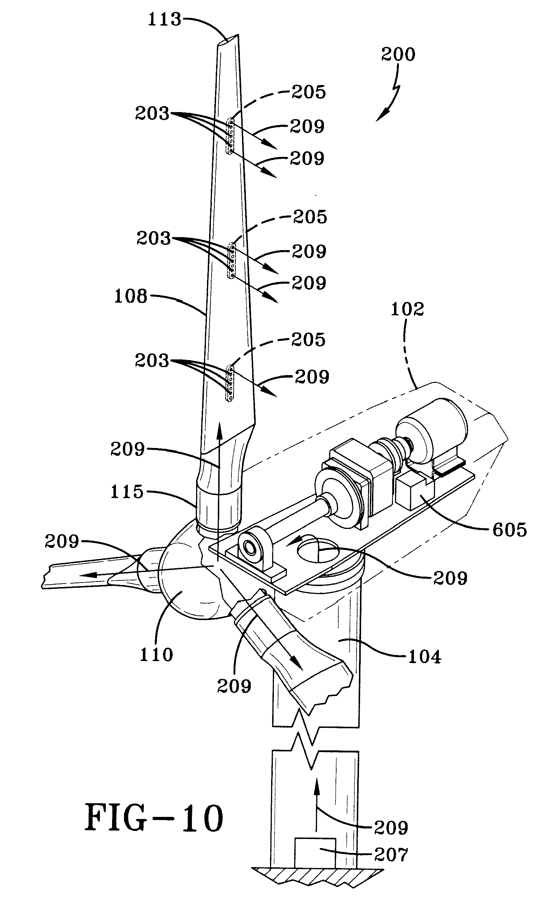

Referring to FIG. 10, the present disclosure includes another embodiment of a wind turbine blade system 200 having a plurality of openings 203 disposed on an opening module 205. The system 200 includes the arrangement of blade 108, opening module 205 with openings 203 and hub 110 shown and disclosed in FIG. 1 above. In addition, as shown in FIG. 6, a controller 605 is present. In this embodiment, the fluid moving device 207 is mounted at the base of tower 104. In this embodiment, the fluid flow 209 may travel through the tower 104 and the nacelle 102 prior to being delivered to openings 203. The fluid flow 209 may provide cooling to components or equipment in the tower 104 or nacelle 102. An advantage of the arrangement shown in FIG. 10 includes the ability to utilize larger equipment as fluid moving device 207, wherein such fluid moving device 207 does not impose a weight penalty on the turbine. In addition, if the fluid moving device 207 is positioned outside the tower, the size is substantially unrestricted, and substantially without weight penalty.

FIG. 11 shows an exemplary embodiment of a blade 108 having opening modules 205. As shown, the blade 108 includes a leading edge 1101 and a trailing edge 1103. The openings 203 direct fluid, such as air, along a surface of the blade 108 in a direction toward the trailing edge. Fluid flow over the surface of the blade 108 provides effects, such as augmenting aerodynamic lift. The opening module 205 and/or the openings 203 may include louvers 1105 to further direct the flow of fluid to provide or alter the aerodynamics of blade 108. Other effects provided by the flow of fluid may be reduced noise or mechanical advantages. Other structures may be utilized to direct fluid flow, such as ducts, nozzles, guiding valves, or other fluid directing structures. The aerodynamics of particular blade designs may be enhanced or otherwise altered by the direction of fluid flow over or from the surface of blade 108. For example, a direction of fluid flow, provided by opening 203 may be selected for a specific radial location and/or specific chordwise location corresponding to the blade design and/or geometry. Such selection of fluid flow parameters over the blade may augment the aerodynamic character in a desirable direction (e.g., high lift). Such selective flow of fluid may also be configured to reduce or eliminate radial (spanwise) air flow near the root, which is typically counter-productive to making power.

FIG. 12 shows an exemplary embodiment of a variable blockage device 1201 for placement in fluid conduits or in the interior of blade 108. The variable blockage device 1201 includes stopper 1203 mounted on a guide wire 1205. The stopper 1203 has a geometry that complements an orifice 1207 in flow restriction plate 1209. The variable blockage device 1201 may include, for example, a stopper 1203 fabricated from polymeric material, such as polyurethane, a restriction plate 1209 fabricated from fiberglass and a guide wire 1205 fabricated from plastic, rubber or other suitable material. In one embodiment, the variable blockage device 1201 may allow fluid flow 209 to move stopper 1203 to a position along guide wire 1205 to permit passage of fluid flow. In this embodiment, the stopper 1203 is mounted on guide wire 1205, but is permitted to slide along guide wire 1205 substantially along its axis. In another embodiment, the stopper 1203 may be affixed to the guide wire 1205 and the guide wire may be actuated or otherwise moved, for example, on an elastically deformable wire, to engage and disengage the stopper 1203 with orifice 1207. While FIG. 12 shows fluid flow 209 flowing bottom to top (as shown in FIG. 12), the fluid flow 209 may also be in the opposite direction. Movement and/or actuation of the stopper 1203 may provide controlled fluid flow 209 wherein the flow may be stopped, slowed or substantially unrestricted. The variable blockage device 1201 is not limited to the configuration shown in FIG. 12, but may include other valve or blockage arrangements that selectively and/or controllably permit flow of fluid. While the variable blockage device 1201 may be placed in the interior of blade 108, the variable blockage device may be placed in any location through which fluid is forced, including at the fluid moving device, in conduits or openings 203.

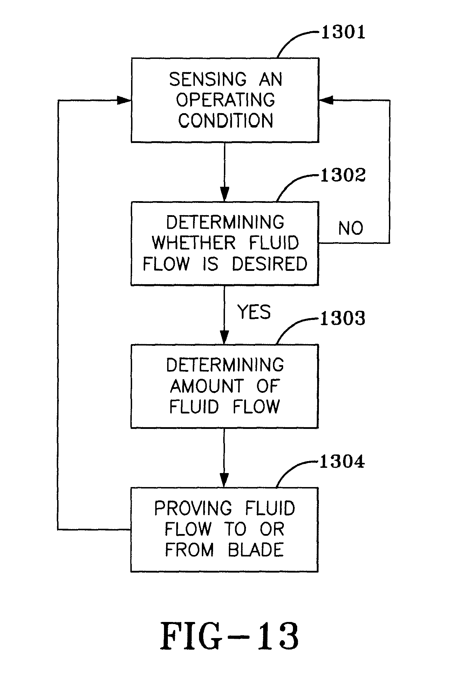

Referring to FIG. 13, the present disclosure includes a method for operating a wind turbine. The method includes sensing an operating condition for the wind turbine (box 1301). The operating condition may include conditions such as, but not limited to, wind speed, mechanical loads, blade position, wind turbine configuration, deflections or other parameters for which a change in blade aerodynamics may be desirable. For example, the operating condition may include the blade azimuth position, rotor position, generator condition, or other wind turbine configuration. The method further includes determining whether fluid flow is desired (box 1302). This step may be predetermined by the user or may be automatically determined based on the operating conditions. If no fluid flow is desired, the method returns to sensing an operating condition. If fluid flow is desired, the amount of fluid flow is determined (box 1303). The rate or amount of fluid flow desired can be determined from a predetermined set of values corresponding to change in system loads or blade deflection as the volumetric flow of fluid delivered to, or extracted from the blade is varied based upon a model system. This relationship can be stored in the controller to determine desired fluid amounts. Utilizing these predetermined values, the particular fluid amount delivered may be a function of the amount of load or deflection change desired in the system at a specific moment in time. The specific amount of fluid determined will also be dependent upon the wind turbine type and wind turbine configuration and may vary between installation locations and/or configurations. In other embodiments, fluid flow may be a simple function of turbine configuration, i.e. the blade azimuth position with respect to the tower. After the amount of fluid flow is determined, the fluid is provided to or from the blade (box 1304). The fluid is provided by the fluid moving device or other suitable method. The controller provides instructions to the fluid moving device or flow restriction devices (e.g. louvers or variable blockage device).

The present disclosure includes embodiments of controlled fluid delivery to a blade surface utilizing a fluid moving device and/or one or more inlets from which the device receives fluid, and one or more outlets to which the device delivers the fluid. The controlled amount of fluid provided to the openings may be provided by altering the power supplied to the fluid moving device to control the volumetric flow rate delivered by the device. In the event the device is mechanically powered, the mechanical system is configured to meter the fluid mechanically or by altering the operation of the mechanical system. In certain embodiments, fluid movers, such as axial flow blowers, may have an inlet vane as part of their design that can be rotated open/closed, thus controlling the amount of fluid. Fluid flow at the outlet point may be controlled by flow controlling features such as louvers, which can also alter the flow direction after ejection onto the blade surface (see louvers 1105 illustrated in FIG. 11). Controlled fluid flow may also be provided by positioning a variable blockage device in conduits guiding the flow, for example a valve. In one example, a stopper is connected to a guide wire (see FIG. 12). The wire may be actively controlled, or be influenced by pure centrifugal force. Variable blockage devices may be used either before the fluid moving device (upstream), or after the fluid moving device (downstream). Controlled fluid flow may include directions the fluid flow, either in whole or in part, to another outlet beside the default outlets. This alternate outlet could be located on the blade, but might also be positioned at the hub, nacelle or tower. Having the fluid flow through this alternate outlet may prevent the build-up of pressure within the flow control system when the fluid mover is not switched off while blocking flow through the normal outlets. Redirection to the other outlets can be achieved by actively closing (in whole or in part) the plenum towards the normal outlets while opening the plenum towards the other exit. Alternatively, the plenum towards the alternate outlet is opened, but the plenum towards the normal outlet is unaltered and the fluid flows through both sets of holes.

While the disclosure has been described with reference to a preferred embodiment, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the preferred mode contemplated for carrying out this disclosure, but that the disclosure will include all embodiments falling within the scope of the appended claims.

Various aspects and embodiments of the present invention are now defined by the following numbered clauses:
1. A wind turbine blade system, comprising:
   a controller;
   a blade rotatably attached to a rotor of a wind turbine;
   one or more openings disposed along at least one surface of the blade; and a fluid moving device arranged and disposed to provide fluid to or from the one or more openings;
   wherein a controlled amount of the fluid is provided to the one or more openings as determined by the controller.
2. The wind turbine blade system of clause 1, further comprising a sensor capable of sensing an operating condition.
3. The wind turbine blade system of any preceding clause, wherein the openings are arranged and disposed on the blade to alter the aerodynamics or loads of the blade when the fluid is provided to the one or more openings.
4. The wind turbine blade system of any preceding clause, wherein sufficient fluid is provided to the one or more openings to alter lift of the blade.
5. The wind turbine blade system of any preceding clause, wherein the openings are arranged and disposed on the blade to alter the aerodynamics or loads of the blade when the fluid is drawn from the one or more openings.
6. The wind turbine blade system of any preceding clause, wherein sufficient fluid is drawn from the opening to reduce or eliminate an aerodynamic boundary layer.
7. The wind turbine blade system of any preceding clause, further comprising a fluid conduit arrangement.
8. The wind turbine blade system of any preceding clause, wherein the fluid conduit arrangement includes a variable blockage device disposed therein.
9. The wind turbine blade system of any preceding clause, wherein the fluid moving device is a blower.
10. The wind turbine blade system of any preceding clause, wherein the openings are configured to controllably permit fluid flow.
11. A wind turbine, comprising:
   a controller;
   a plurality of blades rotatably attached to a rotor of the wind turbine, at least one of the plurality of blades having one or more openings; and
   a fluid moving device arranged and disposed to provide fluid to or from the one or more openings;
   wherein a controlled amount of the fluid is provided to the one or more openings as determined by the controller.
12. The wind turbine of any preceding clause, further comprising a sensor capable of sensing an operating condition.
13. The wind turbine of any preceding clause, wherein the openings are arranged and disposed on the blade to alter the aerodynamics or loads of the blade when the fluid is provided to the one or more openings.
14. The wind turbine of any preceding clause, wherein the openings are arranged and disposed on the blade to alter the aerodynamics or loads of the blade when the fluid is drawn from the one or more openings.
15. The wind turbine of any preceding clause, further comprising a fluid conduit arrangement.
16. The wind turbine of any preceding clause, wherein the fluid moving device is a blower.
17. The wind turbine of any preceding clause, wherein the openings are configured to controllably permit fluid flow.
18. A method for operating a wind turbine, comprising:
   providing a blade having one or more openings;
   sensing an operating condition;
   determining whether fluid flow is desired in response to the operating condition sensed;
   determining an amount of fluid flow desired in response to the operating condition sensed; and
   providing the amount of fluid to or from the openings.
19. The method of any preceding clause, wherein the determining whether fluid flow is desired is in response to the operating condition sensed.
20. The method of any preceding clause, wherein the operating condition is selected from a group consisting of wind speed, mechanical loads, blade position, wind turbine configuration, deflections and combinations thereof.

## Claims

1. A wind turbine blade system (200), comprising:
a controller (605);
a blade rotatably attached to a rotor (106) of a wind turbine (100);
one or more opening (203) disposed along at least one surface of the blade (108); and
a fluid moving device (207) arranged and disposed to provide fluid to or from the one or more opening (203);
wherein a controlled amount of the fluid is provided to the one or more opening (203) as determined by the controller (605).

2. The wind turbine blade system (200) of claim 1, further comprising a sensor capable of sensing an operating condition.

3. The wind turbine blade system (200) of any preceding claim, wherein the opening (203) are arranged and disposed on the blade (108) to alter the aerodynamics or loads of the blade (108) when the fluid is provided to the one or more opening (203).

4. The wind turbine blade system (200) of any preceding claim, wherein sufficient fluid is provided to the one or more opening (203) to alter lift of the blade (108).

5. The wind turbine blade system (200) of any preceding claim, wherein the opening (203) are arranged and disposed on the blade (108) to alter the aerodynamics or loads of the blade (108) when the fluid is drawn from the one or more opening (203).

6. The wind turbine blade system (200) of any preceding claim, wherein sufficient fluid is drawn from the opening to reduce or eliminate an aerodynamic boundary layer.

7. The wind turbine blade system (200) of any preceding claim, further comprising a fluid conduit arrangement.

8. The wind turbine blade system (200) of any preceding claim, wherein the fluid conduit arrangement includes a variable blockage device disposed therein.

9. The wind turbine blade system (200) of any preceding claim, wherein the fluid moving device (207) is a blower.

10. The wind turbine blade system (200) of any preceding claim, wherein the opening (203) are configured to controllably permit fluid flow.
